# FASCICULE DE BREVET EUROPEEN

(11) **EP 0 461 055 B1**
(45) Date de publication et mention de la délivrance du brevet: **27.04.1994**
(21) Numéro de dépôt: 91440044.5
(22) Date de dépôt: 29.05.1991
(51) Int. Cl.: B05C 3/12, B31C 3/04, B31C 11/04, B31B 1/62, B05C 11/02

(54) **Station d'encollage de bandes continues dans une installation pour la fabrication d'éléments en carton**
Klebstoffauftrageinrichtung für durchlaufende Warenbahnen in einem Apparat zur Herstellung von Papiererzeugnissen
Glue applicator for continuous webs in an apparatus for making cardboard products

(30) Priorité: 05.06.1990 FR 9007118
(43) Date de publication de la demande: 11.12.1991
(73) Titulaire: PACK'INDUSTRIE S.A., 68170 Rixheim (FR)
(72) Inventeur: Intering, Michel, F-68990 Heimsbrunn (FR)
(74) Mandataire: Nithardt, Roland

(56) Documents cités:
- EP-A- 0 125 071
- EP-A- 0 317 842
- FR-A- 1 385 631
- GB-A- 2 034 203
- US-A- 2 784 697
- US-A- 2 814 313
- US-A- 3 471 322

## Description

La présente invention concerne une station d'encollage de bandes défilant en continu, dans une installation pour la fabrication d'éléments en carton par collage des bandes les unes sur les autres, pourvue d'au moins un dispositif d'encollage traversé par l'une des bandes, chaque dispositif d'encollage ayant un bac agencé pour contenir un bain de colle, des moyens d'alimentation en colle et des moyens de guidage agencés pour définir à choix au moins deux chemins différents pour la bande qui traverse ce dispositif, à savoir un premier chemin qui passe dans le bain de colle et un second chemin qui n'y passe pas.

Dans les installations de ce genre, on connaît deux types principaux de dispositifs d'encollage. Dans le premier type, les bandes sont encollées par immersion dans un bain de colle, de sorte que la colle est appliquée sur leurs deux faces. En général il est prévu un seul bac qui est traversé par plusieurs bandes superposées et espacées les unes des autres, chaque bande étant guidée par des barreaux disposés à l'intérieur du bac, ainsi qu'à son entrée et à sa sortie. Ces barreaux constituent des points de déviation qui créent des sollicitations mécaniques dans la bande et risquent de détériorer les fibres du papier, en combinaison avec l'humidité de la colle. Les ruptures de bandes sont assez fréquentes et elles nécessitent d'arrêter toute la machine pour remettre en place l'ensemble des bandes. Un autre inconvénient de ce type de dispositif est que, dans un même bac, toutes les bandes n'ont pas la même durée d'immersion, car leurs parcours respectifs dans le bain ont nécessairement des longueurs différentes. D'autres problèmes sont dûs à la nécessité d'avoir une série de guides individuels pour les bandes à la sortie du bac. Ces guides ont tendance à enlever par frottement une certaine quantité de colle et à la répartir inégalement. Par ailleurs, ce dispositif ne permet pas d'appliquer simultanément différentes colles sur différentes bandes.

Le second type de dispositif effectue un encollage par dépôt et raclage de colle sur une seule face de la bande. Ceci permet une meilleure souplesse d'exploitation qu'avec le dispositif par immersion, puisque chaque bande est collée individuellement. Par contre, il n'est généralement pas possible de faire ainsi un encollage en double face. Or, il est souvent souhaitable d'appliquer simultanément les deux procédés dans une même fabrication, ce qui nécessite alors deux stations d'encollage distinctes le long du parcours des bandes, ou bien une seule station combinée très complexe.

Le document FR-A-1 385 631 décrit une machine permettant d'imprégner en continu une bande de papier soit par passage dans un bain, soit par enduction sur une seule face, selon le mode d'utilisation de la machine. Dans un premier mode d'utilisation, la bande est débitée à partir d'un premier rouleau et suit un premier chemin qui passe dans un bain d'imprégnation, à l'aide d'une série de rouleaux spécialement agencés. Dans le second mode d'utilisation, la bande provient d'un autre rouleau et elle suit un second chemin qui est totalement différent du premier jusqu'au four de séchage. Avant ce four, le seul élément commun aux deux chemins est un cylindre d'entrée, mais les deux chemins y passent dans des sens opposés. Ce dispositif ne permet pas une commutation entre les deux chemins possibles de la bande, mais représente deux dispositifs d'encollage bien distincts, situés en amont d'une installation commune de séchage et d'enroulage.

La présente invention a pour but de fournir une station d'encollage du type indiqué plus haut, présentant une grande souplesse d'exploitation grâce à la possibilité d'encoller les bandes selon l'un ou l'autre des deux procédés en évitant dans une mesure substantielle les inconvénients mentionnés ci-dessus.

Dans ce but, une station d'encollage selon l'invention est caractérisée en ce que les moyens d'alimentation en colle comportent un distributeur agencé pour délivrer de la colle sur une face de la bande le long du second chemin et disposé à proximité du bac, et en ce que les moyens de guidage comportent un guide mobile entre une première et une deuxième position stable, correspondant respectivement au passage de la bande suivant le premier et le second chemin, ce guide ayant un élément déflecteur qui, dans la première position, est plongé dans le bain et maintient la bande dans le bain, et qui se trouve hors du bain dans la seconde position du guide mobile.

Dans une forme de réalisation préférée, le guide mobile et les autres moyens de guidage sont montés en porte-à-faux et ont des extrémités libres respectives d'un côté de la bande, de sorte que la bande peut être mise en place et enlevée latéralement sur les moyens de guidage.

De préférence, le guide mobile est pivotant autour d'un axe horizontal et coopère avec un levier de commande et avec des organes d'arrêt définissant ses positions stables.

Dans une forme de réalisation particulièrement avantageuse, les deux chemins de la bande se rejoignent sur un racleur supérieur situé au-dessus du bain et contre lequel s'appuie la face supérieure de la bande. Les moyens de guidage peuvent comporter un racleur inférieur situé au-dessus du bain, après le racleur supérieur, et sur lequel s'appuie la face inférieure de la bande. Au moins l'un desdits racleurs peut être formé par un barreau ayant une arête de raclage et une portion de surface arrondie, ce barreau étant réglable par pivotement autour de son axe longitudinal de manière que la bande s'appuie soit contre l'arête de raclage, soit uniquement contre la portion de surface arrondie. De préférence, ladite portion de surface arrondie comporte une série de rainures parallèles dirigées dans la direction de déplacement de la bande.

Dans sa forme de réalisation préférée, la station d'encollage comporte plusieurs dispositifs d'encollage disposés à des niveaux différents et traversés chacun par une seule bande, les bandes encollées étant disposées les unes au-dessus des autres sur leur parcours entre la station d'encollage et la station de formage.

La station d'encollage peut avantageusement comporter des moyens pour délivrer un premier type de colle dans au moins un dispositif d'encollage et un second type de colle dans au moins un autre dispositif d'encollage.

De préférence, la station d'encollage comporte pour chaque bande un dispositif individuel de freinage, comprenant une lame-ressort, montée de manière pivotante sur un axe horizontal et pourvue d'une surface convexe agencée pour être appuyée sur une face de la bande, et une came excentrique de commande agencée pour presser de manière réglable la lame-ressort contre la bande.

La présente invention et ses avantages apparaîtront mieux dans la description suivante d'un exemple de réalisation, en référence aux dessins annexés, dans lesquels :
- la figure 1 est une vue schématique en élévation d'une installation pour la fabrication en continu de tubes en carton par enroulement de bandes, comprenant une station d'encollage selon l'invention,
- la figure 2 est une vue en plan d'un dispositif individuel pour l'encollage d'une bande,
- la figure 3 est une vue latérale en élévation du dispositif d'encollage de la figure 2 dans une première position,
- la figure 4 est une vue analogue à la figure 3 et montre une seconde position du dispositif d'encollage,
- la figure 5 est une vue en coupe transversale suivant la ligne V-V de la figure 2,
- la figure 6 est une vue en coupe agrandie d'un racleur, suivant la ligne VI-VI de la figure 2, et
- la figure 7 représente schématiquement un frein individuel pour une bande.

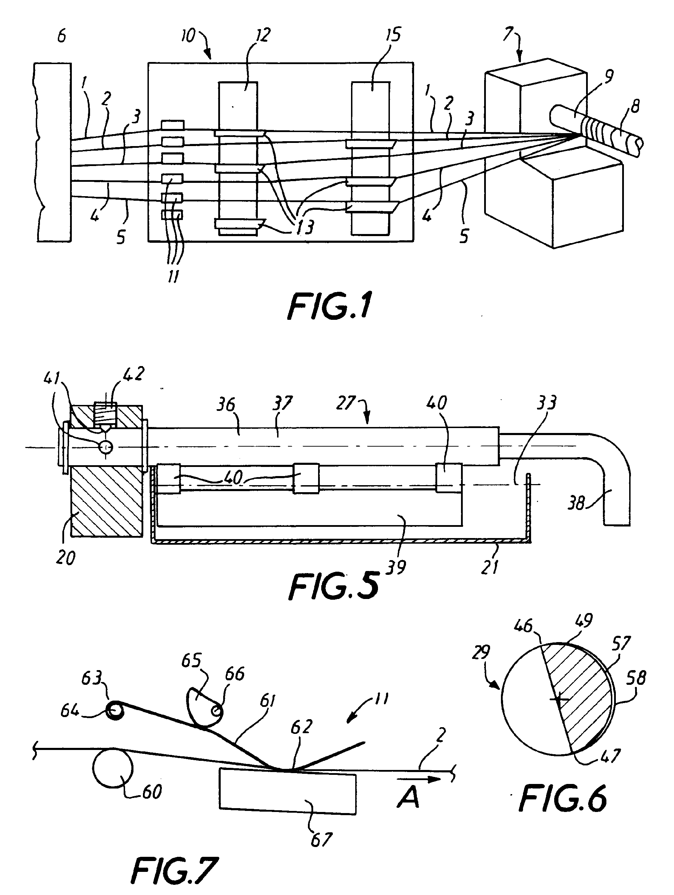

Dans l'installation représentée à la figure 1, des bandes continues 1 à 5 en papier ou en d'autres matières sont délivrées simultanément par une station de déroulement 6 à une station 7 de formage de tubes 8, à travers une station d'encollage 10 appliqueur de la colle sur plusieurs de ces bandes. Dans la station de formage 7, les bandes sont enroulées en hélice et de manière superposée sur un mandrin rotatif 9.

La station d'encollage 10 comporte successivement une série de dispositifs individuels 11 de freinage des bandes, un premier poste d'encollage 12 équipé d'une série de dispositifs individuels d'encollage 13 agencés pour encoller chacun une seule bande, puis un second poste d'encollage 15 équipé également d'un ou plusieurs dispositifs individuels d'encollage 13 qui sont traversés par certaines des bandes. Les deux postes d'encollage 12 et 15 ont chacun leurs propres moyens d'alimentation en colle et ils sont utilisés pour appliquer des colles respectives différentes sur les bandes. Par exemple, le poste 12 applique sur les bandes 3 et 5 une colle d'un premier type tandis que le poste 15 applique sur les bandes 2 et 4 une colle d'un second type. Ainsi, chaque bande 2 à 5 est encollée dans un bac séparé et de la manière qui convient.

On remarque que les bandes encollées 2 à 5 se trouvent sensiblement les unes au dessus des autres à la sortie de la station d'encollage 10, mais elles peuvent avoir entre elles de légers décalages horizontaux, en raison de leurs différences d'inclinaison à leur point d'application sur le mandrin 9. On notera également que ces bandes ne touchent aucun organe de guidage entre les dispositifs d'encollage du poste 15 et le mandrin 9, ce qui évite un raclage sur les bandes encollées.

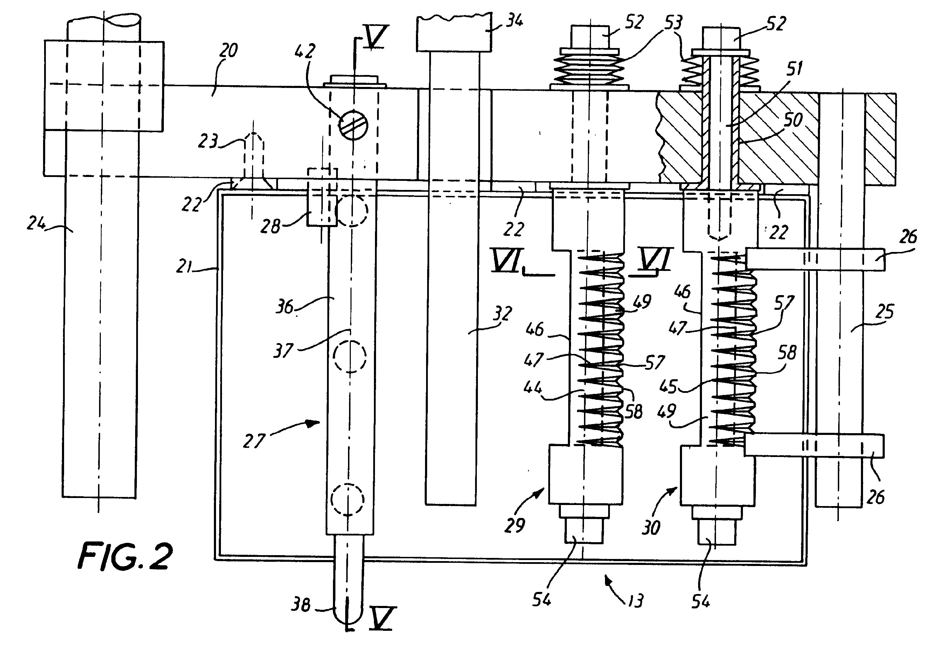

Les figures 2 à 5 montrent plus en détail un dispositif d'encollage 13. Celui-ci comporte un support latéral 20 contre lequel un bac 21 est fixé au moyen de pattes 22 et de vis 23. Le support 20 porte également un barreau cylindrique de guidage 24 en amont du bac 21 et un barreau 25 destiné à porter, le cas échéant, une paire de guides latéraux 26 du côté de la sortie du bac. Ces guides 26 sont réglables en position. Ils peuvent être enlevés dans certaines applications. En regard du bac 21, le support 20 porte en outre un guide mobile 27, un arrêt 28 pour ce guide, un racleur supérieur 29 et un racleur inférieur 30. De plus, il est pourvu d'une échancrure 31 à travers laquelle passe un distributeur de colle 32. Le bac 21 est agencé pour contenir un bain de colle liquide 33 qui est représenté par son niveau supérieur.

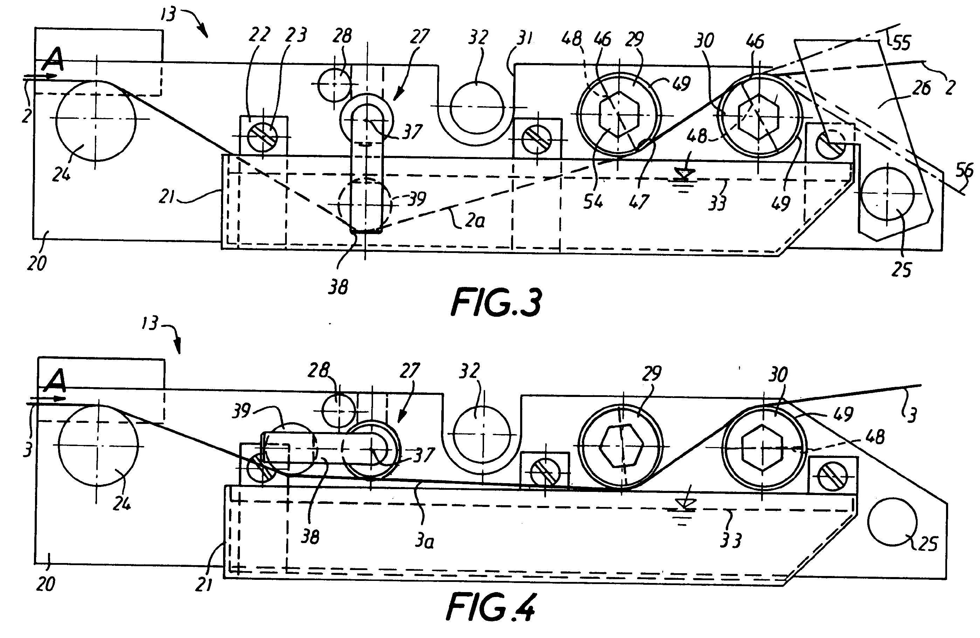

Les figures 3 et 4 montrent deux positions différentes du guide mobile 27, correspondant à des chemins différents parcourus par la bande à encoller. Dans le cas de la figure 3, la bande 2, avançant dans le sens de la flèche A, suit un parcours 2a qui passe dans le bain de colle 33, de sorte que la bande est encollée sur ses deux faces par immersion. Dans le cas de la figure 4, la bande 3 suit un autre chemin 3a qui reste hors du bain de colle 33 et où elle est encollée par le distributeur 32 uniquement sur sa face supérieure. A cet effet, le distributeur 32 est couplé à une vanne 34 permettant de sélectionner la distribution de colle soit par un orifice d'extrémité déversant la colle dans le bac de manière à maintenir son niveau (cas de la figure 3), soit par une fente inférieure (non représentée) délivrant la colle sur la face supérieure de la bande (cas de la figure 4). Comme on le voit plus particulièrement sur la figure 5, le guide mobile 27 comporte un barreau axial 36 monté dans le support 20 de manière à pouvoir pivoter autour de son axe longitudinal 37, ce pivotement étant commandé manuellement au moyen d'un levier coudé 38 qui prolonge le barreau 36 devant le bac 21. Un barreau cylindrique 39 destiné à s'appuyer sur la bande est fixé rigidement au barreau 36 à l'aide d'entretoises 40. Le guide 27 a deux positions stables décalées de 90° et définies par deux cavités coniques 41 coopérant avec une vis à bille 42 montée dans le support 20. Ces deux positions sont illustrées respectivement par les figures 3 et 4. De plus, l'arrêt 28 forme une butée de sécurité pour la première entretoise 40 en cas de tension excessive de la bande.

Chacun des deux racleurs 29, 30 est monté dans le support 20 de manière pivotante autour de son axe longitudinal 44, 45, de manière à être réglable en position par rapport à la bande. En effet, dans la zone où il est en contact avec la bande, le racleur a une section transversale semi-circulaire de manière à présenter deux arêtes parallèles 46 et 47 entre une surface plane 48 et une surface cylindrique 49. L'arête inférieure 47 du racleur supérieur 29 et l'arête supérieure 46 du racleur inférieur 30 sont destinés à racler et égaliser la couche de colle sur les faces correspondantes de la bande. On règle leur incidence sur la bande par pivotement des racleurs. La figure 2 montre plus particulièrement comment chaque racleur est monté dans le support 20 au moyen d'une douille 50 fixée au racleur par un boulon 51 dont la tête 52 est appuyée sur des rondelles élastiques "Belleville" 53, assurant un maintien du racleur par friction. La position angulaire de chaque racleur peut être ajustée manuellement au moyen d'une clé s'engageant sur son extrémité libre 54 à six pans. Cela permet non seulement d'ajuster la position de l'arête de raclage sur la bande, mais aussi de tourner suffisamment le racleur, par exemple le racleur 30 dans le cas de l'encollage monoface illustré à la figure 4, pour que la bande 3 glisse sur la surface cylindrique 49 du racleur. Cette surface cylindrique permet également une grande variation d'inclinaison de la bande à la sortie du dispositif d'encollage 13, comme le montre la figure 3, où l'on a représenté en trait mixte la limite supérieure 55 et la limite inférieure 56 de l'inclinaison de la bande 2.
Dans l'exemple de réalisation représenté ici, notamment dans les figures 2 et 6, on a fraisé des petites rainures parallèles 57 dans la surface cylindrique 49 des racleurs 29 et 30, ces rainures étant séparées par des crêtes 58 sur lesquelles peut s'appuyer la bande encollée. On pourra utiliser ce côté strié du racleur à la place des arêtes 46 ou 47, pour répartir des colles très fluides telles que les silicates, de manière à laisser des stries de colle sur la bande.

Du fait que les organes 24, 27, 29 et 30 sur lesquels s'appuie la bande sont tous montés en porte-à-faux sur le support 20, il est facile de mettre en place et d'enlever la bande latéralement, du côté de l'extrémité libre de ces éléments, le cas échéant après avoir relevé le guide mobile 27 jusqu'à la position de la figure 4. Ainsi, on peut remplacer très facilement une bande cassée ou défectueuse sans toucher aux autres bandes dans la station d'encollage, et sans arrêter la machine à spiraler dans la station 7.

La figure 7 montre schématiquement l'un des freins 11 agissant sur l'une quelconque des bandes 1 à 5, par exemple la bande 2, après son passage sur un barreau de guidage 60 à l'entrée de la station d'encollage. Ce frein est formé par une lame ressort 61 ayant une partie incurvée 62 qui presse la bande 2 contre une enclume 67, l'extrémité arrière 63 de la lame 61 étant recourbée et montée de manière pivotante sur une tige fixe 64. La lame 61 est pressée vers le bas, en un point situé entre sa partie arrondie 62 et son extrémité arrière 63 au moyen d'une came excentrique 65 ajustable par pivotement autour de son axe 66. Ceci permet de régler la force de freinage de la bande 2 par friction entre la lame 61 et l'enclume 67, notamment en fonction de la tension et des dimensions de la bande, des dimensions du tube à fabriquer, ainsi que de la méthode d'encollage mise en oeuvre dans le dispositif 13 correspondant. La flexibilité de la lame 61 permet avantageusement d'encaisser des à-coups de tension dans la bande, notamment dans la fabrication de tubes circulaires.

La description qui précède montre qu'une installation selon l'invention présente des avantages remarquables par rapport à l'art antérieur :
- possibilité d'encoller chaque bande individuellement et de choisir combien de faces seront encollées,
- combinaison de deux colles différentes dans un même tube en carton.
- possibilité d'encollage d'une bande donnée par simple pivotement du guide 27.
- diminution du nombre de points de déviation des bandes ainsi que des angles de déviation, ce qui évite de blesser les fibres du papier et permet des vitesses de fabrication plus importantes. Le temps d'imprégnation peut être le même pour toutes les bandes.
- La distance entre le point où la bande est encollée et le point où elle est enroulée sur le mandrin, correspondant à ce qu'on appelle le "temps ouvert de la colle" est la même pour toutes les bandes.
- Chaque bac individuel 21 peut être démonté facilement, par exemple son nettoyage. Pendant ce temps le réglage des racleurs 29 et 30 peut être conservé et la bande peut rester en place.
- Temps d'imprégnation très court, ce qui évite un mouillage trop important du papier dans l'eau contenu dans la colle et permet de réduire l'humidité du tube fabriqué, pour une même qualité de collage.
- L'alimentation de chaque dispositif d'encollage 13 peut être coupée individuellement pour le mettre hors service.
- La station d'encollage est très compacte et facile à utiliser.
- Comme il n'y a qu'une bande dans chaque dispositif d'encollage 13, en cas de rupture d'une bande, cette bande peut être réintégrée dans la nappe sans qu'il soit nécessaire d'arrêter la machine.
- On peut supprimer tous les guides de bandes tels que 26, après le dernier racleur, ce qui évite un dernier raclage intempestif.
- Utilisation de freins surfaciques à réglage excentrique d'où une précision importante du réglage de tension.
- Freins ouverts latéralement, ce qui permet d'enfiler la bande de côté.
- Possibilité de soulever manuellement l'extrémité libre de la lame ressort du frein lors de l'enfilage de la bande, sans modifier le réglage de tension.

La présente invention n'est pas limitée à la forme de réalisation décrite ci-dessus, mais elle s'étend à toutes modifications ou variantes évidentes pour un homme du métier. En particulier la station d'encollage peut comprendre plusieurs postes tels que 12 et 15, pour des colles différentes, et chacun des postes peut avoir un nombre quelconque de dispositifs individuels d'encollage 13, ou aussi certains dispositifs classiques prévus pour un seul mode d'encollage.

## Revendications

1. Station d'encollage de bandes défilant en continu, dans une installation pour la fabrication d'éléments en carton par collage des bandes les unes sur les autres, pourvue d'au moins un dispositif d'encollage (13) traversé par l'une des bandes (1 à 5), chaque dispositif d'encollage ayant un bac agencé pour contenir un bain de colle, des moyens d'alimentation en colle et des moyens de guidage agencés pour définir à choix au moins deux chemins différents (2a, 3a) pour la bande qui traverse ce dispositif, à savoir un premier chemin (2a) qui passe dans le bain de colle (33) et un second chemin (3a) qui n'y passe pas, les moyens d'alimentation en colle comportant un distributeur (32) agencé pour délivrer de la colle sur une face de la bande le long du second chemin (3a) et disposé à proximité du bac (21), caractérisée en ce que les moyens de guidage comportent un guide (27) mobile entre une première et une deuxième position stable, correspondant respectivement au passage de la bande suivant le premier (2a) et le second chemin (3a), ce guide ayant un élément déflecteur (39) qui, dans la première position, est plongé dans le bain et maintient la bande dans le bain, et qui se trouve hors du bain dans la seconde position du guide mobile (27).

2. Station d'encollage selon la revendication 1, caractérisée en ce que le guide mobile (27) et les autres moyens de guidage (24, 29, 30) sont montés en porte-à-faux et ont des extrémités libres respectives d'un côté de la bande, de sorte que la bande peut être mise en place et enlevée latéralement sur les moyens de guidage.

3. Station d'encollage selon la revendication 1, caractérisée en ce que le guide mobile (27) est pivotant autour d'un axe horizontal (37) et coopère avec un levier de commande (38) et avec des organes d'arrêt (41, 42) définissant ses positions stables.

4. Station d'encollage selon la revendication 1, caractérisée en ce que les deux chemins (2a, 3a) de la bande se rejoignent sur un racleur supérieur (29) situé au-dessus du bain et contre lequel s'appuie la face supérieure de la bande.

5. Station d'encollage selon la revendication 4, caractérisée en ce que les moyens de guidage comportent un racleur inférieur (30) situé au-dessus du bain, après le racleur supérieur (29), et sur lequel s'appuie la face inférieure de la bande.

6. Station d'encollage selon la revendication 4 ou 5, caractérisée en ce qu'au moins l'un desdits racleurs (29, 30) est formé par un barreau ayant au moins une arête de raclage (46, 47) et une portion de surface arrondie (49), ce barreau étant réglable par pivotement autour de son axe longitudinal de manière que la bande s'appuie soit contre l'arête de raclage, soit uniquement contre la portion de surface arrondie.

7. Station d'encollage selon la revendication 6, caractérisée en ce que ladite portion de surface arrondie (49) comporte une série de rainures prallèles (57) dirigées dans la direction de déplacement de la bande.

8. Station d'encollage selon la revendication 1, caractérisée en ce qu'elle comporte plusieurs dispositifs d'encollage (13) disposés à des niveaux différents et traversés chacun par une seule bande, les bandes encollées (2 à 5) étant disposées les unes au-dessus des autres sur leur parcours à travers la station d'encollage ( 10).

9. Station d'encollage selon la revendication 8, caractérisée en ce qu'elle comporte des moyens (12, 15) pour délivrer un premier type de colle dans au moins un dispositif d'encollage (13) et un second type de colle dans au moins un autre dispositif d'encollage (13).

10. Station d'encollage selon la revendication 1, caractérisée en ce qu'elle comporte pour chaque bande un dispositif individuel de freinage (11), comprenant une lame-ressort (61), montée de manière pivotante sur un axe horizontal et pourvue d'une surface convexe (62) agencée pour être appuyée sur une face de la bande, et une came excentrique de commande (65) agencée pour presser de manière réglable la lame-ressort contre la bande.

## Patentansprüche

1. Klebstoffauftrageinrichtung für durchlaufende Warenbahnen in einem Apparat zur Herstellung von Papiererzeugnissen durch Kleben der Warenbahnen aufeinander, versehen mit mindestens einer Klebvorrichtung (13), die von einer der Warenbahnen (1 bis 5) durchlaufen wird; jede Klebvorrichtung verfügt über ein Becken mit dem Klebstoffbad, eine Vorrichtung für die Klebstoffzufuhr, sowie Steuerungsmöglichkeiten zur wahlweisen Definition von mindestens zwei verschiedenen Wegen (2a, 3a), die diese Vorrichtung durchlaufen, das heisst, ein erster Weg (2a), der durch das Klebstoffbad (33) führt und ein zweiter Weg (3a), der nicht durch das Klebstoffbad führt, Vorrichtungen für die Klebstoffzufuhr, bestehend aus einem Verteiler (32), der so angelegt ist, dass der Klebstoff auf einer Seite der Warenbahn entlang des zweiten Wegs (3a) zugeführt wird und in der Nähe des Beckens (21) angebracht ist, dadurch gekennzeichnet, dass die Steuerungsvorrichtungen eine bewegliche Führung (27) enthalten, die sich zwischen einer ersten und zweiten festen Position befindet, die jeweils dem Durchlauf der Warenbahn entspricht, die dem ersten (2a) und dem zweiten Weg (3a) folgt, wobei diese Führung ein Ablenkungselement (39) enthält, das in der ersten Position in das Bad gesenkt wird und die Warenbahn darin hält und sich in der zweiten Position der beweglichen Führung (27) ausserhalb des Bades befindet.

2. Klebstoffauftrageinrichtung gemäss Anspruch 1, dadurch gekennzeichnet, dass die bewegliche Führung (27) und die anderen Führungsvorrichtungen (24, 29, 30) überhängend montiert sind und an jeweils einer Seite der Bahn freie Enden haben, so dass die Warenbahn seitlich an der Führungsvorrichtung eingelegt und entnommen werden kann.

3. Klebstoffauftrageinrichtung gemäss Anspruch 1, dadurch gekennzeichnet, dass die bewegliche Führung (27) um eine horizontale Achse (37) drehbar ist und mit einem Steuerhebel (38) und Stopvorrichtungen (41, 42), die die feste Position definieren, zusammen wirkt.

4. Klebstoffauftrageinrichtung gemäss Anspruch 1, dadurch gekennzeichnet, dass die beiden Wege (2a, 3a) der Warenbahn auf einem oberen Abstreifer (29) zusammentreffen, der oberhalb des Bades liegt und auf die obere Seite der Bahn drückt.

5. Klebstoffauftrageinrichtung gemäss Anspruch 4, dadurch gekennzeichnet, dass die Führungsvorrichtungen einen unteren Abstreifer (30) enthalten, der sich oberhalb des Bades befindet, hinter dem oberen Abstreifer (29) und auf die untere Seite der Warenbahn drückt.

6. Klebstoffauftrageinrichtung gemäss Anspruch 4 oder 5, dadurch gekennzeichnet, dass mindestens einer der besagten Abstreifer (29, 30) durch einen Stab mit mindestens einer Abstreifkante (46, 47) und einem abgerundeten Teil der Oberfläche (49) gebildet wird, wobei dieser Stab durch Drehung um seine Längsachse einstellbar ist, so dass die Warenbahn sich entweder gegen die Abstreifkante oder nur auf den abgerundeten Teil der Oberfläche legt.

7. Klebstoffauftrageinrichtung gemäss Anspruch 6, dadurch gekennzeichnet, dass der besagte abgerundete Teil der Oberfläche (49) eine Reihe paralleler Rillen (57) enthält, die in Richtung der Bewegung der Warenbahn ausgerichtet sind.

8. Klebstoffauftrageinrichtung gemäss Anspruch 1, dadurch gekennzeichnet, dass sie mehrere Klebvorrichtungen (13) enthält, die auf verschiedenen Ebenen angeordnet sind und die jede von einer einzelnen Warenbahn durchlaufen werden, wobei die beklebten Warenbahnen (2 bis 5) bei ihrer Durchquerung der Klebstoffauftrageinrichtung (10) aufeinandergelegt werden.

9. Klebstoffauftrageinrichtung gemäss Anspruch 8, dadurch gekennzeichnet, dass sie Vorrichtungen (12, 15) enthält, eine erste Klebstoffart in mindestens einer Klebvorrichtung (13) zu liefern und eine zweite Klebstoffart in mindestens einer anderen Klebvorrichtung (13).

10. Klebstoffauftrageinrichtung gemäss Anspruch 1, dadurch gekennzeichnet, dass sie für jede Warenbahn eine individuelle Bremsvorrichtung (11) enthält, mit einem Federblatt (61), das drehbar auf eine horizontale Achse montiert und mit einer konvexen Oberfläche (62) versehen ist, so eingerichtet, dass sie sich auf eine Seite der Warenbahn legt, und eine exzentrische Steuernocke (65), um auf einstellbare Weise, das Federblatt gegen die Warenbahn zu pressen.

## Claims

1. Glue applicator for continuous webs in an apparatus for making cardboard products by gluing the webs to one another, equipped with at least one gluing facility (13) crossed by one of the webs (1 to 5), each gluing facility being foreseen with a glue tray, a glue feed facility and guide facilities placed so as to define, as required, at least two different tracks (2a, 3a) for the web crossing this facility, that is, a first track (2a) which passes through the glue tray (33) and a second track (3a) which does not pass through it, the glue feed facility comprises a built-in distributor (32) to deliver glue to one side of the web along the second track (3a) and is fitted close to the glue tray (21), characterized in that, the guide facilities comprise a mobile guide (27) between fixed positions one and two, corresponding respectively to the passage of the web following the first (2a) and the second (3a) tracks, this guide is foreseen with a deflector element (39) which, in position one, is extended into the tray and keeps the web in the tray, and which is out of the tray in position two of the mobile guide (27).

2. Glue applicator according to claim 1, characterized in that the mobile guide (27) and the other guide components (24, 29, 30) are mounted jutting-out and have free ends in respect to one side of the web, in such a way that the web may be placed and removed laterally on the guide facility.

3. Glue applicator according to claim 1, characterized in that the mobile guide (27) pivots on a horizontal axis (37) and interacts with a control lever (38) and with the stopping facilities (41, 42) defining the fixed positions.

4. Glue applicator according to claim 1, characterized in that the two tracks (2a, 3a) of the web come together on an upper scraper (29) located above the glue tray and against which presses the upper surface of the web.

5. Glue applicator according to claim 4, characterized in that the guide facility comprises a lower scraper (30), placed above the tray behind the upper scraper (29) and against which presses the lower surface of the web.

6. Glue applicator according to claim 4 or 5, characterized in that at least one of the said scrapers (29, 30) consists of a bar with at least one scraping edge (46, 47) and a rounded section of the surface (49), this bar being adjustable by pivoting on its longitudinal axis in such a way that the web either presses against the scraper or against the rounded section of the surface only.

7. Glue applicator according to claim 6, characterized in that the said rounded section of the surface (49) comprises a series of parallel grooves (57) laid out in the direction of movement of the web.

8. Glue applicator according to claim 1, characterized in that it comprises several gluing facilities (13) positioned at different levels and crossed each by one web only, the glued webs (2 to 5) being placed one above the other on their way through the glue applicator (10).

9. Glue applicator according to claim 8, characterized in that it is foreseen with means (12, 15) for delivering a first type of glue in at least one gluing facility (13) and a second type of glue in at least one other gluing facility (13).

10. Glue applicator according to claim 1, characterized in that it is foreseen with an individual braking system for each web (11), comprising a spring blade (61), mounted in a manner as to pivot on a horizontal axis and foreseen with a convex surface (62), positioned in such a way as to press upon one surface of the web, and an eccentric control cam (65) fitted in such a way as to allow adjustment of the spring blade against the web.
